Europäisches Patentamt

European Patent Office

Office européen des brevets

(11) Veröffentlichungsnummer: **0 372 301**
**A2**

(12) # EUROPÄISCHE PATENTANMELDUNG

(21) Anmeldenummer: **89121639.2**

(22) Anmeldetag: **23.11.89**

(51) Int. Cl.5: **F16L 3/12**

(30) Priorität: **09.12.88 CH 4569/88**

(43) Veröffentlichungstag der Anmeldung:
**13.06.90 Patentblatt 90/24**

(84) Benannte Vertragsstaaten:
**AT BE CH DE ES FR GB IT LI NL SE**

(71) Anmelder: **GEORG FISCHER
AKTIENGESELLSCHAFT
Mühlentalstrasse 105
CH-8201 Schaffhausen(CH)**

(72) Erfinder: **Trösch, Paul
Buchthalerstrasse 109
CH-8203 Schaffhausen(CH)**
Erfinder: **Perfido, Erasmo
Geisshaldenweg 23
CH-8200 Schaffhausen(CH)**

(54) **Einrichtung zur bogenförmigen Führung und Halterung flexibler Leitungsrohre.**

(57) Zur bogenförmigen Umlenkung von horizontal auf einer Deckenschalung (5) verlegten, in Schutzrohren (3) angeordneten Leitungsrohren (4) werden Bogenführungsteile (2) mittels Haken in Stangen (12) von Halteteilen eingehängt, wobei mehrere Bogenführungsteile (2) auch fürunterschiedliche Rohrdimensionen nebeneinander angeordnetwerden können.

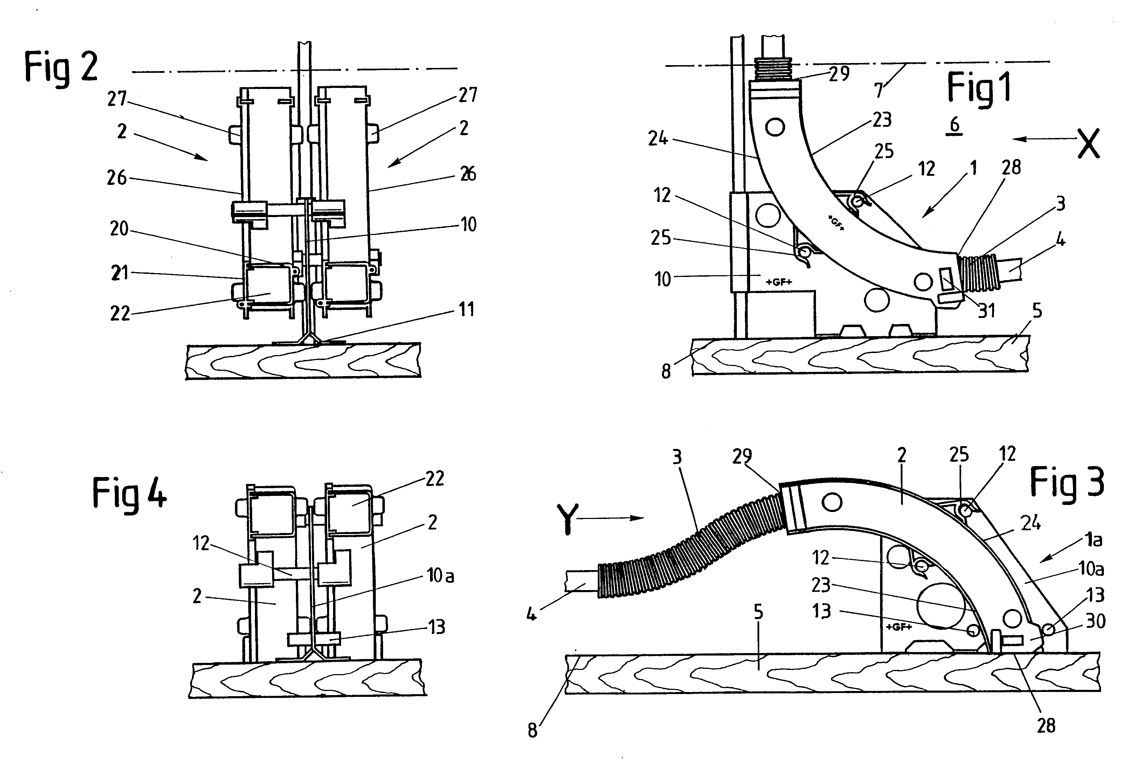

Die gleichen Bogenführungsteile (2) können gemäss Figur 1 für eine Umlenkung nach oben und gemäss Figur 3 für eine Umlenkung nach unten verwendet werden.

Fig 1

Fig 3

EP 0 372 301 A2

## Einrichtung zur bogenförmigen Führung und Halterung flexibler Leitungsrohre

Die Erfindung betrifft eine Einrichtung zur bogenförmigen Führung und Halterung flexibler Leitungsrohre, insbesonders für in Schutzrohren angeordneten Sanitär-Installationsrohren, wie sie im Oberbegriff von Anspruch 1 gekennzeichnet ist.

Durch die CH-PS 665 673 ist eine Einrichtung der eingangs genannten Art bekanntgeworden, bei welchen U-förmig ausgebildete bogenförmige Kanäle nebeneinader auf der Deckenschalung befestigt werden, wobei die auf der Deckenschalung verlegten in Schutzrohren angeordneten Leitungsrohre in den Kanälen liegend bogenförmig nach unten zum Austritt aus der Deckenunterseite umgelenkt werden. Die Umlenkbögen sind dabei so ausgebildet dass ein Herausziehen der Leitungsrohre gewährleistet ist. Eine Umlenkung der Leitungsrohre nach oben für dessen Austritt auf Deckenoberseite ist bei dieser Einrichtung nicht möglich. Hierfür müssen wieder andere bogenförmige Teile verwendet werden, so dass eine grosse Lagerhaltung unterschiedlicher Teile erforderlich ist und die Teile auch nicht rationell hergestellt werden können.

Aufgabe der vorliegenden Erfindung ist die Schaffung einer Einrichtung der eingangs genannten Art, welche für die Herausführung der Leitungsrohre aus der Deckenunterseite und auch aus der Deckenoberseite geeignet ist, wobei die vorgegebene Bogenführung ein problemloses späteres Herausziehen der Leitungsrohre aus den Schutzrohren gewährleisten soll.

Erfindungsgemäss wird diese Aufgabe durch die kennzeichnenden Merkmale von Anspruch 1 gelöst.

Besonders vorteilhafte Ausgestaltung der Erfindung sind in den abhängigen Ansprüchen gekennzeichnet.

Erfindungsgemäss können die jeweils für eine Rohrdimension gleich ausgebildeten Bogenführungsteil an Halteteilen so angeordnet werden, dass ein Austritt der Rohre an der Deckenoberseite oder an der Deckenunterseite möglich ist. Bogenführungsteile für unterschiedliche Rohr-Dimensionen können in beliebiger Reihenfolge nebeneinander montiert werden. Der für die garantierte Lebensdauer der Rohre notwendige Radius wird auf jeden Fall eingehalten. Ein Knicken der Rohre ist ausgeschlossen.

Die Erfindung ist in Ausführungsbeispielen in den beiliegenden Zeichnungen dargestellt und nachfolgend beschrieben. Es zeigen:

Figur 1 eine Seitenansicht einer Ausführung der Einrichtung mit auf der Deckenoberseite austretenden Rohrleitungen.

Figur 2 eine Ansicht in Richtung X von Figur 1,

Figur 3 eine Seitenansicht einer Ausführung mit auf der Deckenunterseite austrenden Rohrleitungen,

Figur 4 eine Ansicht in Richtung Y von Figur 3,

Figur 5 eine Ausführungsvariante der in Figur 3 gezeigten Einrichtung,

Figur 6 eine Frontansicht von Figur 5,

Figur 7 ein Detailausschnitt von Figur 5 im Schnitt vor der Betonierung der Decke,

Figur 8 ein Detailausschnitt entsprechend Figur 7 nach der Betonierung der Decke,

Figur 9 eine Ausführungsvariante der in Figur 7 gezeigten Deckendurchführungen,

Figur 9a ein Querschnitt des in Figur 9 gezeigten Stutzens,

Figur 10 eine Ausführungsvariante der in Figur 1 gezeigten Einrichtung,

Figur 11 eine Frontansicht von Figur 10,

Figur 12 eine weitere Ausführungsvariante von Figur 10 und

Figur 13 eine Auführungsvariante mit einer zu Figur 12 unterschiedlicher Anordnung der Bogenführungsteile.

Figur 1 und 2 zeigen eine Ausführungsvariante der Einrichtung mit zwei an einem Halteteil 1 angeordneten Bogenfüh rungsteilen 2.

Das für alle Ausführungsvarianten gleich ausgebildete Bogenführungsteil 2 besteht aus einem Gehäuseteil 20 mit ei-nem annähernd U-förmigen Kanal und einem Deckel 21, welche derart fest miteinander verbunden sind, dass ein Kanal 22 gebildet wird. Der Kanal 22 verläuft bogenförmig vorzugsweise in einem Einviertel-Kreisbogen.

Gehäuseteil 20 und Deckel 21 vorzugsweise im Spritzgussverfahren aus Kunststoff, vorzugsweise aus Polyethylen hergestellt. Deckel 21 und Gehäuseteil 20 sind durch eine Schweiss-oder Klebeverbindung, vorzugsweise durch eine Ultraschall-Schweissung miteinander fest verbunden.

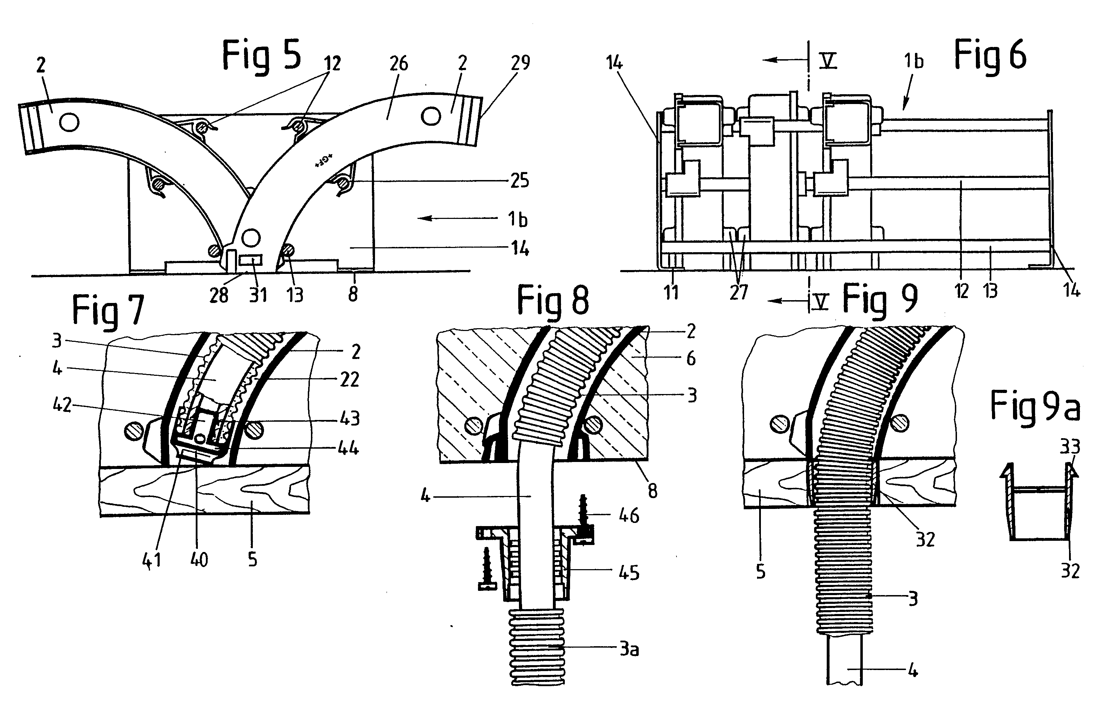

An der inneren und dem äusseren Umfangsrand 23, 24 des Kanals 22 ist je ein Haken 25 angeordnet, welcher federnd ausgebildet ist. An den Seitenwänden 26 sind Ausbuchtungen angeformt, welche Distanzhalter 27 bilden. Durch diese Distanzhalter entstehen, wie aus den Figuren 6 und 11 ersichtlich, Abstände der nebeneinander angeordneten Bogenführungsteile 2, wodurch die in Schutzrohren 3 verlegten Leitungsrohre 4 Abstände aufweisen, welche mit den nachfolgend montierten Armaturen und Verteiler übereinstimmen.

Das in den Figuren 1 und 2 gezeigte Halteteil 1 weist einen vertikalen Steg 10 auf, welcher mittels daran angeordneten Auflage-Stützen 11 auf einer Deckenschalung 5 für eine Beton-Decke 6 eines Gebäudes befestigt ist . An dem Steg 10 sind quer dazu Stangen 12 befestigt, an welchen die Bogenführungsteile 2 mittels den Haken 25 leicht einhängbar und auswechselbar angeordnet sind.

Die Stangen 12 sind dabei so angeordnet, dass der bogenförmige Kanal 22 des Bogenführungsteil 2 von einem horizontal und unten liegende Ende 28 zu einem vertikalen oberen Ende 29 verläuft, wodurch die horizontal auf der Deckenschalung 5 verlegten Schutzrohre 3 mit den Leitungsrohren 4 vertikal für einen Austritt aus der Deckenoberseite 7 der dann erstellten Betondecke umgelenkt werden.

Die Figuren 3 und 4 zeigen eine Ausführungsvariante eines Halteteils 1a, bei dem an einem mittleren Steg 10a die beiden Stangen 12 so angeordnet sind, dass der bogenförmige Kanal 22 des Bogenführungsteils 2 mit seinem unteren Ende 28 annäherd vertikal auf der Deckenschalung 5 aufliegt und das obere Ende 29 annähernd horizontal verläuft. Dadurch werden mit den gleichen Bogenführungsteilen 2 die auf der Deckenschalung 5 verlegten Schutzrohre 3 mit den Leitungsrohren 4 bogenförmig für einen Austritt aus der Deckenunterseite 8 nach unten umgelenkt. Für eine Fixierung der Bogenführungsteile 2 sind an den Steg 10a zusätzlich zwei Fixierstangen 13 angeordnet. Das Bogenführungsteil 2 ist im Bereich der inneren Umfangswand 23 und einem an der äusseren Umfangswand 24 angeordneten Vorsprung 30 zwischen den beiden Fixierstangen 13 gehalten.

Die Figuren 5 und 6 zeigen die Einrichtung für die Halterung von Bogenführungsteilen 2 mit einer Anordnung für den Austritt der Schutz- und Leitungsrohre 3, 4 auf der Deckenunterseite 8, wobei mehrere gleiche, wie bei den Ausführungen gemäss den Figuren 1 bis 4 verwendete Bogenführungsteile 2 nebeneinander angeordnet sind.

Ein Halteteil 1b weist zwei vertikale Stege 14 mit Auflagestützen 11 zur Befestigung auf der Deckenschalung 5 auf. Zwischen den Stegen 14 sind vier Stangen 12 zum Einhängen der Bogenführungsteile 2 und zwei Fixierstangen 13 zu deren Fixierung angeordnet.

Wie aus den Figuren 5 und 6 ersichtlich, können die Bogenführungsteile 2 aufgrund der vier Stangen 12 so angeordnet werden, dass dessen horizontales Ende 29 abwechselnd nach der einen und der anderen Seite gerichtet ist. Selbstverständlich können die Bogenführungsteile 2 auch so eingehängt werden, dass alle nebeneinanderliegenden Teile 2 mit dem Ende 29 entweder nach der einen oder nach der anderen Seite gerichtet sind, wobei deren Abstand zueinander durch die Distanzhalter 27 gegeben ist.

Die Figuren 7 und 8 zeigen eine Durchführung des Leitungsrohres 4 durch die Deckenunterseite 8 bei nicht durchbohrter Deckenschalung 5. Das Leitungsrohr 4 mit Schutzrohr 3 wird im Kanal 22 des Bogenführungsteiles 2 bis auf die Deckenschalung 5 gestossen. Damit kein Beton in die Rohre 3, 4 eindringen kann, wird das Schutzrohr 3 mit einer Kappe 40 verschlossen. Um zu verhindern, dass das Leitungsrohr 4 in das Schutzrohr zurückgleiten kann, wird dieses mit einem Rohr-Haken 42 fixiert. Der Rohr-Haken 42 weist Haken 43 auf, welche in den Innenumfang des Leitungsrohres 4 einhaken. Ein Steg 44 des Rohr-Hakens 42 ist dabei zwischen den Enden der Rohre 3, 4 und einem Verschlussboden 41 der Kappe 40 angeordnet. Nach dem Betonieren der Betondecke 6 und Entfernen der Deckenschalung 5 wird das Leitungsrohr 4 mit dem eingehakten Rohr-Haken 42 nach Bedarf nachgezogen. Wie aus Figur 8 ersichtlich wird dann zur Verlängerung des Schutzrohres 3 ein Kupplungsstück 45 mittels Schrauben 46 am Bogenführungsteil 2 befestigt, wobei das Schutzrohr 3a in Nuten des Kupplungstriches 45 eingehängt wird.

Figur 9 zeigt eine Ausführung, wenn die Deckenschalung 5 durchbohrt wurden ist, wobei die Rohre 3, 4 durch die Deckenschalung 5 geführt werden. Damit beim Entfernen der Deckenschalung 5 das Schutzrohr 3 nicht beschädigt wird, wird ein Stutzen 32 mit seinen Haken 33 (siehe Figur 9a)in Ausnehmungen 31 des Bogenführungsteiles 2 (Siehe Figur 5) eingehängt.Der Stutzen 32 steckt dann in der Bohrung der Deckenschalung 5.

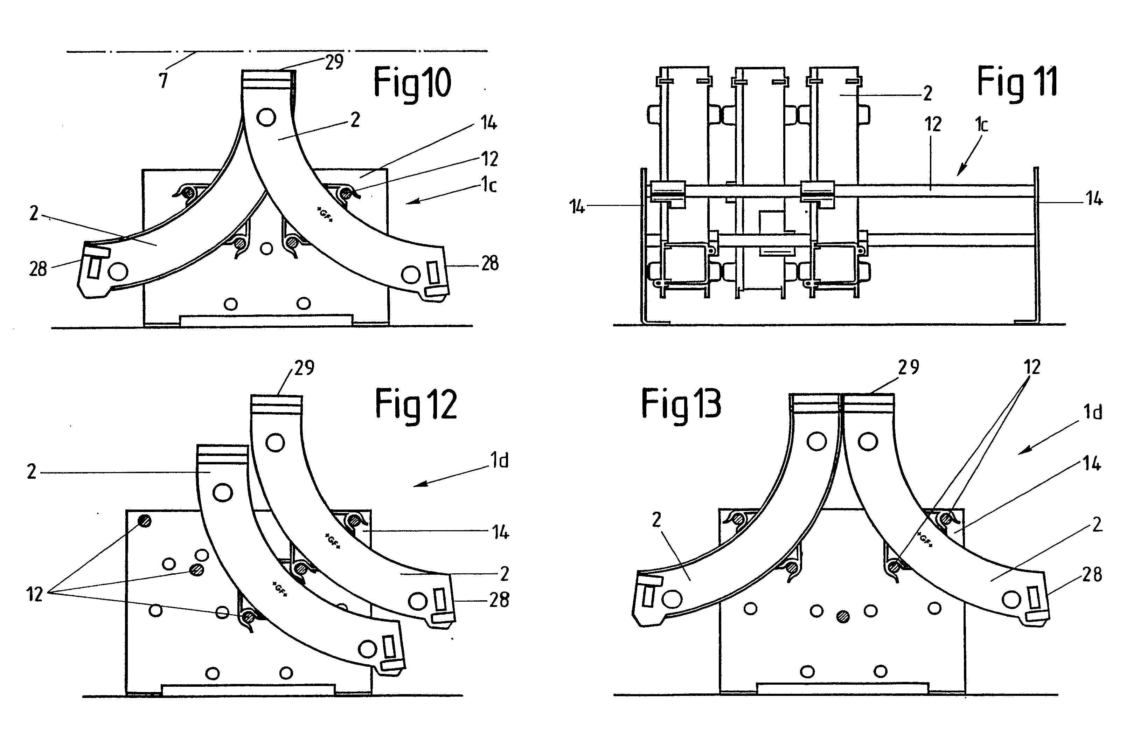

Die Figuren 10 und 11 zeigen ein Halteteil 1c mit vier zwischen den Stegen 14 angeordneten Stangen 12, wobei die Bogenführungsteile 2 so einhängbar sind, dass die Rohre 3, 4 zum Austritt aus der Deckenoberseite 7 nach oben gebogen werden.

Wie aus den Figuren 10 und 11 ersichtlich, können die Bogenführungsteile 2 aufgrund der vier Stangen 12 so angeordnet werden, dass dessen horizontales Ende 28 abwechselnd nach der einen und der anderen Seite gerichtet ist.

Die Figuren 12 und 13 zeigen eine weitere Ausführungsvariante eines Halteteils 1d mit fünf Stangen 12, welche zwischen den Stegen 14 angeordnet sind.

Gemäss Figur 12 können mehrere Bogenführungsteile 2 in zwei Reihen in zueinander paralleler Lage an drei der Stangen 12 eingehängt werden, wobei die von der einen Seite zugeführten Rohre 3, 4 nach oben umgelenkt werden. Gemäss Figur 13 können an dem gleichen Halteteil 1d zwei sich symmetrisch gegenüberliegende Reihen von Bogenführungsteilen 2 an vier Stangen 12 eingehängt werden, wodurch von beiden Seiten zugeführte Rohre 3, 4 nach oben umgelenkt werden.

Die Bogenführungsteile können für im Durchmesser unterschiedliche Schutzrohre 3 einen entsprechenden Querschnitt des Kanals 22 aufweisen, wobei die Distanz der Haken 25 zueinander zum Einhängen in die Stangen 12 immer gleich ist, wodurch eine geringe Lagerhaltung von Halteteilen gegeben ist.

**Ansprüche**

1. Einrichtung zur bogenförmigen Führung und Halterung flexibler Leitungsrohre, insbesonders für in Schutzrohren angeordneten Sanitär-Installationsrohren, welche auf Deckenschalungen verlegt und aus der Decke herausgeführt werden, dadurch gekennzeichnet, dass mindestens ein Bogenführungsteil (2) mit einem bogenförmigen Führungskanal (22) an einem Halteteil (1) befestigbar ist, wobei das Bogenführungsteil (2) für einen Rohraustritt an der Deckenoberseite (7) oder für einen Rohraustritt an der Deckenseite (8) verwendbar ausgebildet ist und in entsprechender Richtung an ein entsprechendes Halteteil (1) ansteckbar ist.

2. Einrichtung nach Anspruch 1, dadurch gekennzeichnet, dass das Bogenführungsteil (2) auf Stangen (12) des Halteteils (1) aufsteckbare Haken (25) aufweist.

3. Einrichtung nach Anspruch 1 oder 2, dadurch gekennzeichnet, dass der bogenförmige Kanal (22) im Querschnitt umfangsmässig geschlossen ausgebildet ist.

4. Einrichtung nach einem der Ansprüche 1 bis 3, dadurch gekennzeichnet, dass an Seitenwänden (26) des Bogenführungsteils (2) Distanzhalter (27) angeordnet sind.

5. Einrichtung nach einem der Ansprüche 1 bis 4, dadurch gekennzeichnet, dass das Bogenführungsteil (2) aus ei nem Gehäuseteil (20) mit einem im Querschnitt annähernd U-förmigen Kanal und einem mit dem Gehäusetei (20) fest verbundenen Deckel (21) besteht.

6. Einrichtung nach einem der Ansprüche 1 bis 5, dadurch gekennzeichnet, dass das Halteteil (1,1a) einen vertikalen Steg (10) mit beidseitig angeordneten Stangen (12) aufweist, wobei auf jeder Seite des Steges ein Bogenführungsteil (2) ansteckbar ist.

7. Einrichtung nach Anspruch 6, dadurch gekennzeichnet, dass beidseits des Steges (10) jeweils zwei Stangen (12) derart angeordnet sind, dass jedes der beiden Bogenführungsteile (2) für einen Rohraustritt an der Deckenoberseite (7) ansteckbar ist.

8. Einrichtung nach Anspruch 6, dadurch gekennzeichnet, dass beidseits des Steges (10a) jeweils zwei Stangen (12) für die Halterung und zwei Fixierstangen (13) für die Lagefixierung derart angeordnet sind, dass jedes der beiden Bogenführungsteile (2) für einen Rohraustritt an der Deckenunterseite (8) ansteckbar ist.

9. Einrichtung nach Anspruch 1 bis 5, dadurch gekennzeichnet, dass das Halteteil (1b, 1c, 1d,) aus zwei Stegen (14) mit zwischen den Stegen (14) angeordneten Stangen (12) für die Ansteckbarkeit mehrerer Bogenführungsteile (2) nebeneinander besteht.

10. Einrichtung nach Anspruch 9, dadurch gekennzeichnet, dass zwischen den Stegen (14) Stangen (12) derart angeordnet sind, dass mindestens eine Reihe Bogenführungsteile (2) für einen Rohraustritt an der Deckenoberseite (7) ansteckbar sind.

11. Einrichtung nach Anspruch 9, dadurch gekennzeichnet, dass zwischen den Stegen (14) Stangen (12) für die Halterung und Fixierstangen (13) für die Lagefixierung derart angeordnet sind, dass mindestens eine Reihe Bogenführungsteile (2) für einen Rohraustritt an der Deckenunterseite (8) ansteckbar sind.

12. Einrichtung nach einem der Ansprüche 1 bis 11, dadurch gekennzeichnet, dass an einem Ende (28) des Kanals (22) des Bogenführungsteils (2) ein Stutzen (32) anbrindbar ist, welcher durch eine Oeffnung der Deckenschalung (5) steckbar ist.

13. Einrichtung nach einem der Ansprüche 1 bis 11, dadurch gekennzeichnet, dass das auf die Deckenschalung (5) aufstossende Ende des im Bogenführungsteil (2) angeordneten Schutzrohres (3) mittels einer Kappe (40) verschliessbar ist und dass ein im Leitungsrohr (4) eingehängter Rohr-Haken (42) mit einem Steg (44) zwischen dem Ende des Schutzrohres (3) und einem Verschlussboden (41) der Kappe (40) liegend angeordnet ist.

Fig 2

27  2  26  20  21  22

27  2  26  10  11

Fig 1

29  7  6  X

24  23  25  12  1  28

12  25  10  31  3  4  5  8

Fig 4

22  2  2  10a  13

12  2

Fig 3

Y  3  29  2  25  12

24  1a  10a  13  30

12  23  13

4  5  28  8

EP 0 372 301 A2

Fig 6

Fig 5

Fig 9a

Fig 9

Fig 8

Fig 7

Fig 10

7    29

2    14    12    1c

2    28    28

Fig 11

2    12    1c

14    14

EP 0 372 301 A2

Fig 12

29

2    1d

14    2    28

12

Fig 13

29    12    1d

2    14    2    28